# EUROPÄISCHE PATENTSCHRIFT

(11) **EP 1 424 584 B1**
(45) Veröffentlichungstag und Bekanntmachung des Hinweises auf die Patenterteilung: **28.02.2007**
(21) Anmeldenummer: 02026664.9
(22) Anmeldetag: 29.11.2002
(51) Int. Cl.: G02B 26/08

(54) **Spiegel einer Laserbearbeitungsmaschine**
Mirror for laser processing machine
Miroir pour machine d'usinage au laser

(43) Veröffentlichungstag der Anmeldung: 02.06.2004
(73) Patentinhaber: TRUMPF Werkzeugmaschinen GmbH + Co. KG, 71254 Ditzingen (DE)
(72) Erfinder: Boettcher, Christian, 70565 Stuttgart (DE)
(74) Vertreter: Kohler Schmid Möbus

(56) Entgegenhaltungen:
- DE-A- 3 424 068
- DE-A- 3 900 467
- DE-A- 10 001 900
- DE-A- 10 052 249
- DE-A- 19 628 672
- US-A- 4 932 768

## Beschreibung

Die Erfindung betrifft einen Spiegel einer Laserbearbeitungsmaschine mit einer über ihre Membranrückseite druckbeaufschlagbaren Spiegelplattenmembran und mit einem Membranträger.

Ein derartiger Spiegel ist beispielsweise durch die DE 100 01 900 A1 bekannt geworden.

Durch die DE 100 01 900 A1 ist ein deformierbarer Spiegel mit einer Spiegelplatte und einem konzentrisch auf der Rückseite der Spiegelfläche angreifenden Aktuator bekannt geworden. Der Aktuator arbeitet auf einem hinter der Spiegelplatte gelegenen Ring, der vorzugsweise integral mit der Spiegelplatte ausgebildet ist. Die Sphäre der Spiegelfläche lässt sich außer über die Querschnittsgeometrie des Ringes auch über eine zentralsymmetrische Schwächung der Spiegelplatte beeinflussen, sowie durch statischen Überdruck einer fluidgefüllten Kammer hinter der Spiegelplatte.

Nach der technischen Lehre der DE 39 00 467 A1 sieht man auf der Rückseite des Spiegels einen Hohlraum vor und gibt in diesen Hohlraum mehr oder weniger Druck, so dass sich die Geometrie des Spiegels unter dessen Einfluss ändert.

Bei einem deformierbaren Spiegel nach der Lehre der DE 100 52 249 A1 als Laser-Strahlführungskomponente mit einem Gehäuse, welchem ein Spiegelelement zugeordnet ist, wobei das Spiegelelement verformbar ausgebildet ist, soll das Spiegelelement mittels eines Mediums kühlbar sein.

EP0291596 offenbast einen weiteren druckbeaufschlagbasen Membranspiegel.

Mit Hilfe sphärischer optischer Elemente wie Linsen oder Spiegel können nur der optischen Achse nahe Strahlen mit geringem Abbildungsfehler fokussiert werden, weil mit dem Achsenabstand Abbildungsfehler durch sphärische Aberration zunehmen. Mit zunehmendem Abstand und einer Vergrößerung des Winkels zur optischen Achse tritt ferner Astigmatismus auf.

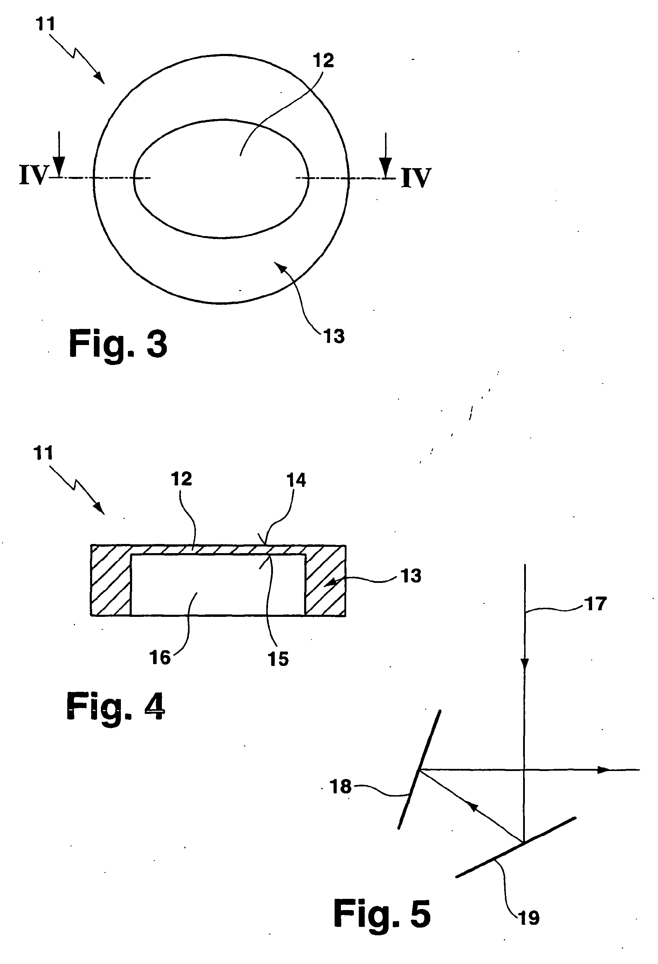

Eine bekannte Möglichkeit zur Reduzierung dieser Abbildungsfehler besteht darin, einen zusätzlichen Umlenkspiegel einzusetzen. **Fig. 5** veranschaulicht eine Strahlführung eines erzeugten Laserstrahls **17** bei einer bekannten Laserbearbeitungsmaschine. Es wird eine kreisrunde reflektierende Fläche eines Spiegels **18** eingesetzt, welche durch eine Druckbeaufschlagung zu einem sphärischen Spiegel 18 verformt werden kann. Es ist ein zusätzlicher Umlenkspiegel **19** erforderlich, welcher den Laserstrahl 17 unter einem kleinen Winkel auf den adaptiven Spiegel 18 lenkt. Es werden zwei Spiegel benötigt, um eine justierbare Fokussierung des Laserstrahls im Bearbeitungskopf der Laserbearbeitungsmaschine zu erreichen.

Allgemein bekannt ist es, dass für einen abbildenden Spiegel der Schnittweite s bei großen Strahlumlenkwinkeln (der optischen Achse), insbesondere 90°-Umlenkungen, im Gegensatz zum sphärischen Spiegel, asphärische Verformungen der reflektierenden Fläche des Spiegels erforderlich sind, wie sie beispielsweise durch adaptive Spiegel mit einer druckbeaufschlagbaren elliptischen oder ovalen reflektierenden Fläche erzeugt werden können. Derartige Spiegel sind aber aufwändig zu realisieren.

Der Erfindung liegt die Aufgabe zu Grunde, einen adaptiven asphärischen Spiegel zu schaffen, welcher einen Laserstrahl um größere Winkel (insbesondere 90°) so umlenkt, dass der Abbildungsfehler, der bei der Umlenkung entsteht, klein ist, und welcher einfach zu fertigen ist.

Diese Aufgabe wird erfindungsgemäß durch einen Spiegel einer Laserbearbeitungsmaschine mit einer Spiegelplattenmembran und mit einem Membranträger gelöst, welcher gemäß Anspruch 1 aufgebaut ist. Membranträger und Spiegelplattenmembran sind fest miteinander verbunden und bilden ein einstückiges Bauteil.

Die Begrenzung der annähernd elliptisch oder annähernd rechteckigen oder ovalen Fläche durch den Membranträger führt bei einer Druckbeaufschlagung dieses Bereichs der Membranrückseite zu einem adaptiven Spiegel mit asphärischer Verformung wie für größere Umlenkwinkel.

Eine Unterfräsung bzw. die Ausfräsung des Membranträgers schafft eine einfache Realisierung in Form der annähernd elliptischen oder ovalen Fläche unabhängig von der Geometrie des Membranträgers, der beispielsweise ringförmig und/oder kreisrund ausgebildet sein kann. Wenn der Membranträger ein kreisrundes Anschlussstück (Rohransatz) umfasst, kann der Spiegel an bestehende Komponenten der Strahlführung leicht angeflanscht werden.

Hinsichtlich der Verwirklichung der Druckbeaufschlagung kommen folgende technische Lösungen in Betracht: Die annähernd elliptische oder annähernd rechteckige oder ovale Fläche kann durch Kühlwasser für die Spiegelplattenmembran oder ein Fluid oder durch einen Aktuator druckbeaufschlagt werden.

Eine vorgegebene makroskopische Krümmung der reflektierenden Fläche des Spiegels führt in Verbindung mit der einstellbaren Druckbeaufschlagung eines annähernd elliptischen oder rechteckigen oder ovalen Bereichs der Spiegelplattenmembran zu einer vorteilhaften Kombination von Fokussierspiegel und Fokusverstellspiegel.

Ein Ausführungsbeispiel der Erfindung und eine bekannte Laserstrahlführung sind in den Zeichnungen schematisch dargestellt und werden nachfolgend mit Bezug zu den Figuren der Zeichnung näher erläutert. Es zeigt:
- **Fig. 1**: eine Ansicht auf die Unterseite eines ersten erfindungsgemäßen Spiegels einer Laserbearbeitungsmaschine;
- **Fig. 2**: einen Schnitt des Spiegels längs einer Linie II-II nach Fig. 1;
- **Fig. 3**: eine Ansicht auf die Unterseite eines nicht erfindungsgemäßen Spiegels einer Laserbearbeitungsmaschine;
- **Fig. 4**: einen Schnitt des Spiegels längs einer Linie IV-IV nach Fig. 3;
- **Fig. 5**: eine Prinzipdarstellung einer Strahlführung einer Laserbearbeitungsmaschine nach dem Stand der Technik.

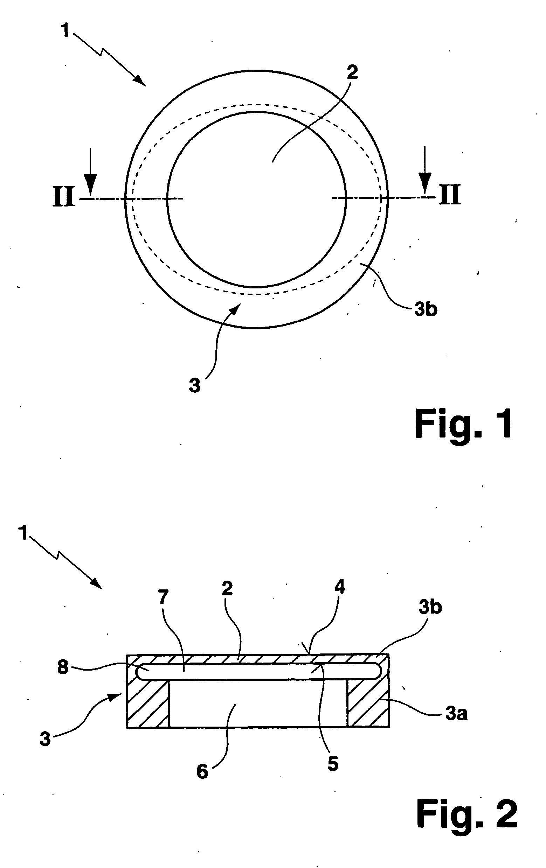

Aus der **Fig. 1** ist der Aufbau eines adaptiven Spiegels **1** einer nicht dargestellten an sich bekannten Laserbearbeitungsmaschine ersichtlich. Adaptiv oder deformierbar bedeutet im Sinne der Erfindung eine asphärische Verformung der Spiegelplattenmembran **2**, welche gezielt variiert und eingestellt werden kann. Derartige adaptive Spiegel 1 können erfindungsgemäß für große Strahlumlenkwinkel verwendet werden.

Der Spiegel **1** umfasst neben der Spiegelplattenmembran 2 einen Membranträger **3**, welcher im Wesentlichen durch einen Rohransatz **3a** (Zylinder) und einen Übergangsbereich **3b** ausgebildet ist und ein Anschlussstück zur Montage des Spiegels **1** an der Laserbearbeitungsmaschine darstellt. Rohransatz 3a, Übergangsbereich 3b und Spiegelplattenmembran 2 bilden gemeinsam ein einstückig ausgebildetes Bauelement, bei dem die Spiegelplattenmembran 2 in den Membranträger 3 integriert ist, d.h. die Spiegelplattenmembran 2 weist eine feste mechanische Einspannung auf.

Die Krümmungen der Spiegelplattenmembran 2 sind von gering konkav über plan nach gering konvex einstellbar. Der Spiegel 1 kann gleichzeitig zur Fokusverstellung und zur Strahlumlenkung des Laserstrahls im Bearbeitungskopf der Laserbearbeitungsmaschine eingesetzt werden.

Zur Erzielung der zuvor genannten Eigenschaften des Spiegels 1 kann die Rückseite der Spiegelplattenmembran 2 druckbeaufschlagt werden. Zur Druckbeaufschlagung ist eine annähernd elliptische Fläche der Spiegelplattenmembran 2 vorgesehen. Die druckbeaufschlagbare Fläche entsteht durch Unterfräsen der Spiegelplattenmembran 2 bzw. durch Ausfräsen einer Ausnehmung **8** des Rohransatzes **3a** unterhalb der Spiegelplattenmembran 2. Die unterfräste Ausbildung ist der **Fig.** 2 zu entnehmen.

Ein erster Spiegelinnenraum (Hohlraum) **6** mit einem kreisförmigen Querschnitt geht in einen zweiten Spiegelinnenraum **7** mit einem elliptischen Querschnitt über. Der Membranträger 3 kann an weitere Bauteile der Laserbearbeitungsmaschine angeflanscht werden, über welche beispielsweise eine Kühlwasserzuleitung in die Spiegelinnenräume 6 und 7 erfolgen kann. Neben der Kühlung der Spiegelplattenmembran 2 wird auch eine Druckbeaufschlagung der Membranrückseite **5** herbeigeführt. Der Spiegelinnenraum 7 kann mit Kühlwasser oder einem Fluid gefüllt werden, so dass die elliptische Fläche der Spiegelplattenmembran 2 gezielt druckbeaufschlagt werden kann.

Es können zusätzliche asphärische (über die Krümmung der adaptiven Funktion hinausgehende) Krümmungen der reflektierenden Fläche 4 der Spiegelplattenmembran 2 ausgebildet oder aufgeprägt sein. Dabei erfährt die Spiegelplattenmembran 2 Dickenabweichungen. Diese Version ist für Anwendungsfälle geeignet, die größere (konvexe als auch konkave) Krümmungen erfordern. Die Spiegelplattenmembran 2 muss nicht zwingend eben ausgebildet sein, sondern durch gezielte Dickenänderungen können unterschiedliche Krümmungen vorgegeben sein. Zum einen kann die reflektierende Fläche 4 des Spiegels 1 eine makroskopische, vorgegebene Krümmung aufweisen ("Fokussierspiegel"), so dass eine Fokussierung des Laserstrahls erreicht wird. Zum anderen kann durch die Druckbeaufschlagung der elliptischen Fläche der Membranrückseite 5 beispielsweise mittels Kühlwassers und die daraus resultierende mikroskopische Adaption eine Fokusverstellung eingestellt werden ("Fokusverstellspiegel"). "Fokusverstellspiegel" und eigentlicher Fokussierspiegel sind dann zusammengefasst.

Die **Figuren 3** und **4** zeigen bei einem Spiegel **11** eine nicht erfindungsgemässe Alternative zur Ausbildung einer Spiegelplattenmembran **12** mit einer elliptischen Fläche. Ein nach außen kreisringförmiger Membranträger **13** ist einstückig mit der Spiegelplattenmembran 12 verbunden und begrenzt nach innen eine Spiegelplattenmembran 12 mit einer elliptischen Fläche. Der Laserstrahl wird an einer reflektierenden Spiegelfläche **14** umgelenkt. Eine Membranrückseite **15** kann druckbeaufschlagt werden, wenn ein einziger Spiegelinnenraum **16** mit Kühlwasser gefüllt wird.

### BEZUGSZEICHENLISTE

- **1**: Spiegel
- **2**: Spiegelplattenmembran
- **3**: Membranträger
- **3a**: Rohransatz
- **3b**: Übergangsbereich
- **4**: Spiegelfläche
- **5**: Membranrückseite
- **6**: Erster Spiegelinnenraum
- **7**: Zweiter Spiegelinnenraum
- **8**: Ausnehmung

- **11**: Spiegel
- **12**: Spiegelplattenmembran
- **13**: Membranträger
- **14**: Spiegelfläche
- **15**: Membranrückseite
- **16**: Spiegelinnenraum
- **17**: Laserstrahl
- **18**: Spiegel
- **19**: Spiegel

## Patentansprüche

1. Spiegel (1; 11)für eine Laserbearbeitungsmaschine mit einer über ihre Membranrückseite (5; 15) druckbeaufschlagbaren Spiegelplattenmembran (2; 12) und mit einem Membranträger (3; 13), der eine kreisrunde Außenkontur aufweist und einen ersten Hohlraum (6) mit kreisförmigen Querschnitt begrenzt, **dadurch gekennzeichnet, dass** der Membranträger (3; 13) eine sich unter der Membranrückseite (5; 15) parallel zur Membranrückeite (5; 15) erstreckende Ausnehmung (8) aufweist, die einen zweiten Hohlraum (7) mit elliptischem, rechteckigem oder ovalen Querschnitt begrenzt, und **dass** mithilfe der Ausnehmung (8) eine druckbeaufschlagbare, elliptische oder rechteckige oder ovale Fläche der Membranrückseite (5; 15) begrenzt wird.

2. Spiegel nach Anspruch 1, **dadurch gekennzeichnet, dass** die elliptische oder rechteckige oder ovale Fläche der Membranrückseite (5; 15) durch Kühlwasser oder ein Fluid druckbeaufschlagbar ist.

3. Spiegel nach Anspruch 1 oder 2, **dadurch gekennzeichnet, dass** die elliptische oder rechteckige oder ovale Fläche der Membranrückseite (5; 15) durch einen Aktuator druckbeaufschlagbar ist.

4. Spiegel nach einem der vorhergehenden Ansprüche, **dadurch gekennzeichnet, dass** der Membranträger (3; 13) einen Rohransatz mit kreisrundem Querschnitt umfasst.

5. Spiegel nach einem der vorhergehenden Ansprüche, **dadurch gekennzeichnet, dass** die reflektierende Fläche (4) des Spiegels (1) eine vorgegebene Krümmung aufweist.

## Claims

1. Mirror (1; 11) of a laser processing machine with a mirror plate diaphragm (2; 12) that can be pressurized via its diaphragm rear side (5; 15), and a diaphragm carrier (3; 13) that has a circular outer contour and delimits a first cavity (6) having a circular cross-section, **characterized in that** the diaphragm carrier (3; 13) has a recess (8) that extends below the diaphragm rear side (5; 15) parallel to the diaphragm rear side (5; 15) and delimits a second cavity (7) having an elliptical, rectangular, or oval cross-section, and **in that** an elliptical or rectangular or oval surface of the diaphragm rear side (5; 15), which can be pressurized, is delimited by means of the recess (8).

2. Mirror according to claim 1, **characterized in that** the elliptical or rectangular or oval surface of the diaphragm rear side (5; 15) can be pressurized by cooling water or a fluid.

3. Mirror according to claim 1 or 2, **characterized in that** the elliptical or rectangular or oval surface of the diaphragm rear side (5; 15) can be pressurized by an actuator.

4. Mirror according to any one of the preceding claims, **characterized in that** the diaphragm carrier (3; 13) has a pipe socket having a circular cross-section.

5. Mirror according to any one of the preceding claims, **characterized in that** the reflecting surface (4) of the mirror (1) has a predetermined curvature.

## Revendications

1. Miroir (1 ; 11) pour une machine d'usinage au laser, comprenant une membrane (2 ; 12) à platine réflectrice pouvant être sollicitée par une pression, par l'intermédiaire de sa face postérieure (5 ; 15), et un porte-membrane (3 ; 13) pourvu d'un profil extérieur circulaire et délimitant une première cavité (6) de section transversale circulaire, **caractérisé par le fait que** le porte-membrane (3 ; 13) comporte un évidement (8) qui s'étend au-dessous de la face postérieure (5 ; 15) de la membrane, parallèlement à ladite face postérieure (5 ; 15), et délimite une seconde cavité (7) de section transversale elliptique, rectangulaire ou ovale ; et **par le fait que** ledit évidement (8) permet de délimiter une surface elliptique, rectangulaire ou ovale de la face postérieure (5 ; 15) de la membrane, pouvant être sollicitée par une pression.

2. Miroir selon la revendication 1, **caractérisé par le fait que** la surface elliptique, rectangulaire ou ovale de la face postérieure (5 ; 15) de la membrane peut être sollicitée à la pression par de l'eau de refroidissement, ou par un fluide.

3. Miroir selon la revendication 1 ou 2, **caractérisé par le fait que** la surface elliptique, rectangulaire ou ovale de la face postérieure (5 ; 15) de la membrane peut être sollicitée à la pression par l'intermédiaire d'un actionneur.

4. Miroir selon l'une des revendications précédentes, **caractérisé par le fait que** le porte-membrane (3 ; 13) comprend un embout tubulaire de section transversale circulaire.

5. Miroir selon l'une des revendications précédentes, **caractérisé par le fait que** la surface réfléchissante (4) dudit miroir (1) offre une courbure préétablie.
